# EUROPEAN PATENT SPECIFICATION

(11) **EP 2 602 125 B1**
(45) Date of publication and mention of the grant of the patent: **16.11.2016**
(21) Application number: 12194827.7
(22) Date of filing: 29.11.2012
(51) Int. Cl.: B60C 11/01, B60C 13/00, B60C 9/26, B60C 15/00

(54) **PNEUMATIC TIRE**
LUFTREIFEN
PNEU

(30) Priority: 05.12.2011 JP 2011266059
(43) Date of publication of application: 12.06.2013
(73) Proprietor: SUMITOMO RUBBER INDUSTRIES LIMITED, Kobe-shi, Hyogo-ken (JP)
(72) Inventor: Nakano, Keita, Kobe-shi, Hyogo-ken, 651-0072 (JP)
(74) Representative: Manitz, Finsterwald & Partner GbR

(56) References cited:
- EP-A2- 1 057 662
- JP-A- 8 244 410

## Description

### Background of the invention

### Field of the Invention

The present invention relates to a pneumatic tire having a low longitudinal spring constant and a wide ground contact area to improve both the ride comfort and cornering performance.

### Description of the Related Art

In recent years, pneumatic tires are requested to have lateral stiffness during cornering with a large load shift as well as high speed durability, for high performance vehicle. In order to satisfy the demand above, a pneumatic tire with a carcass including a plurality of carcass plies is proposed. The pneumatic tire, however, tends to have a high longitudinal spring constant and less ground contact area due to a large rigidity of its sidewall portions. Especially, cornering force generated from the tire being located inside at cornering is not enough, and thereby cornering performance tends to deteriorate.

In order to reduce the longitudinal spring constant of the tire so as to maintain the ride comfort, there is provided a pneumatic tire including a tread portion with dents provided on the axially both sides thereof. Such pneumatic tire, however, has less tread contact-area due to the dents, and thereby cornering performance may deteriorate.

A pneumatic tire having the features of the preamble of claim 1 is known from JP 8 244410 A or EP 1 057 662 A2.

### Summary of the Invention

The present invention has been worked out in light of the circumstances described above, and has a main object of providing a pneumatic tire having the low longitudinal spring constant and wide ground contact area to improve both the ride comfort and cornering performance.

The present invention provides for a pneumatic tire having the features of claim 1. Preferable embodiments are the subject-matter of subclaims.

### Brief Description of the Drawings

FIG. 1 is a cross sectional view of a pneumatic tire showing an embodiment of the present invention.
FIG. 2 is a profile of the tire in FIG. 1.
FIG. 3 is a graph showing an embodiment of an involute like curve.
FIG. 4 is a cross sectional view of a belt showing another embodiment of the present invention.

### Detailed Description

An embodiment of the present invention will be explained below with reference to the accompanying drawings.

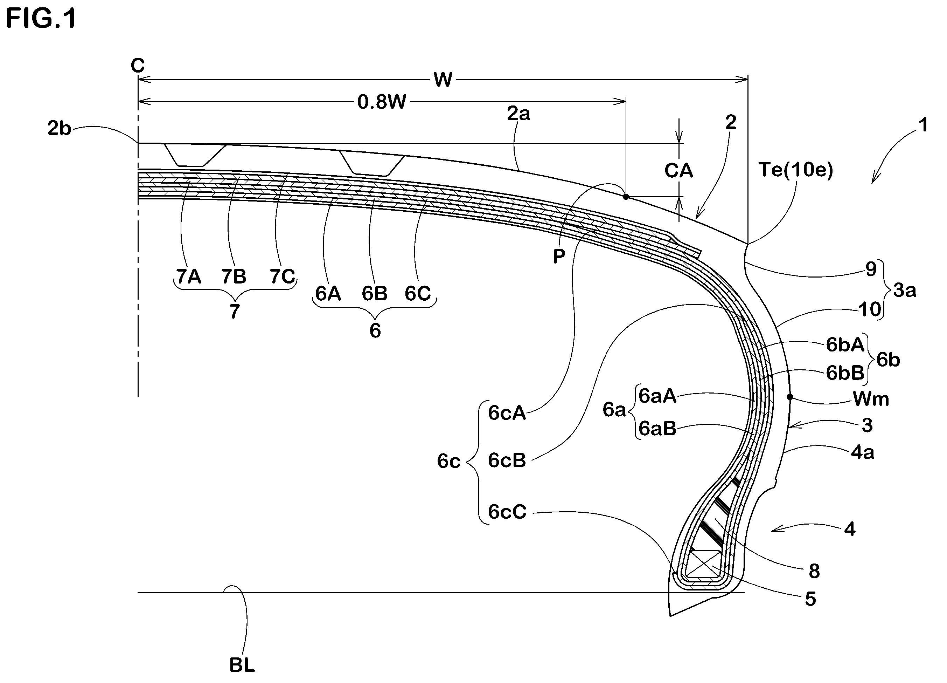

FIG.1 shows a pneumatic tire 1 in accordance with the present embodiment, in a tire meridian section including a tire axis under a standard state. Here, the standard state is such that the tire 1 is mounted on a standard wheel rim and is inflated to a standard pressure but loaded with no tire load. In this application including specification and claims, various dimensions, positions and the like of the tire refer to those under the standard state of the tire unless otherwise noted.

The standard wheel rim is a wheel rim officially approved or recommended for the tire by standards organizations, the standard wheel rim is the "standard rim" specified in JATMA, the "Measuring Rim" in ETRTO, the "Design Rim" in TRA or the like, for example. The standard pressure is the "maximum air pressure" in JATMA, the "Inflation Pressure" in ETRTO, and the maximum pressure given in the "Tire Load Limits at various Cold Inflation Pressures" table in TRA or the like. In case of passenger car tires, however, the standard pressure is uniformly defined by 180 kPa.

As shown in FIG. 1, the pneumatic tire 1 in accordance with the present embodiment comprises: a tread portion 2; a pair of sidewall portions 3; a pair of bead portion 4 each with a bead core 5 therein; a carcass 6 extending between bead cores 5 through the tread portion 2 and sidewall portions 3; a belt 7 disposed radially outside the carcass 6 in the tread portion 2; and a bead apex 8 extending and tapering radially outwardly from each bead core 5. In this embodiment, the pneumatic tire 1 is illustrated as a radial tire with a slick tread pattern for racing use.

The carcass 6 includes three carcass plies with the radially innermost ply 6A, the radially outermost ply 6C and the radially middle ply 6B disposed in between. The innermost ply 6A and the middle ply 6B of the carcass 6 are turn-up plies comprising main portions 6aA and 6bB extending between bead cores 5 and turn-up portions 6bA and 6bB each turned up around the bead core 5 from the axially inside to the outside of the tire. The outermost ply 6C is a non turn-up ply which extends between bead portions 5 without having a pair of turn-up portions. The carcass 6 having three plies may effectively improve the rigidity of the tire such that the tire 1 can be used with a low inner pressure. In such a condition of the tire 1 with the low inner pressure, the tread portion 2 tends to have a wide ground contact area, and thereby a large cornering force may be generated from the tire at a wide load range.

Here, when the inner pressure being inflated to the tire is too high, the improved cornering force may not be obtained at a wide load range. On the other hand, when the inner pressure being inflated to the tire is too low, the tire may burst. Accordingly, the inner pressure of the tire, for example, is preferably in a range of from 120 to 200 kPa.

Each turn-up portion 6bB of the carcass ply 6B has the radially outer end 6cB located in the radially outwardly of the tire than the tire maximum-width point Wm without reaching the belt 7. Each turn-up portion 6cA of the carcass ply 6A has the so-called high turn-up structure having the radially outer end 6cA reaching under the belt 7. Accordingly, each turn-up portion 6bA and 6bB may effectively enhance the rigidity of both the tread portion 2 and sidewall portions 3.

The carcass plies 6A, 6B and 6C, in this embodiment, are composed of cord plies having rubberized carcass cords arranged at an angle in the range of from 75 to 90 degrees with respect to the tire equator C. For the carcass cords, organic fiber cords, e.g. polyester, nylon, rayon, aramid and the like and steel cords can be used. In this embodiment, nylon cords are employed as carcass cords.

The belt 7 comprises at least one ply, in this embodiment three plies 7A, 7B and 7C of cords laid at an angle of from 10 to 45 degrees, in this embodiment 20 degrees with respect to the tire equator C. Accordingly, the rigidity of the tread portion 2 is firmly enhanced.

For the belt cords, metal cords such as steel and organic fiber cords, e.g. aramid, rayon and the like can be used. In this embodiment, aramid cords are used for the radially innermost belt ply 7A, and nylon cords are used for both the radially outmost belt plies 7C and the radially middle belt ply 7CB. Therefore, since the difference in rigidity between carcass 6 and the belt 7 tends to be small, a separation in between may be prevented.

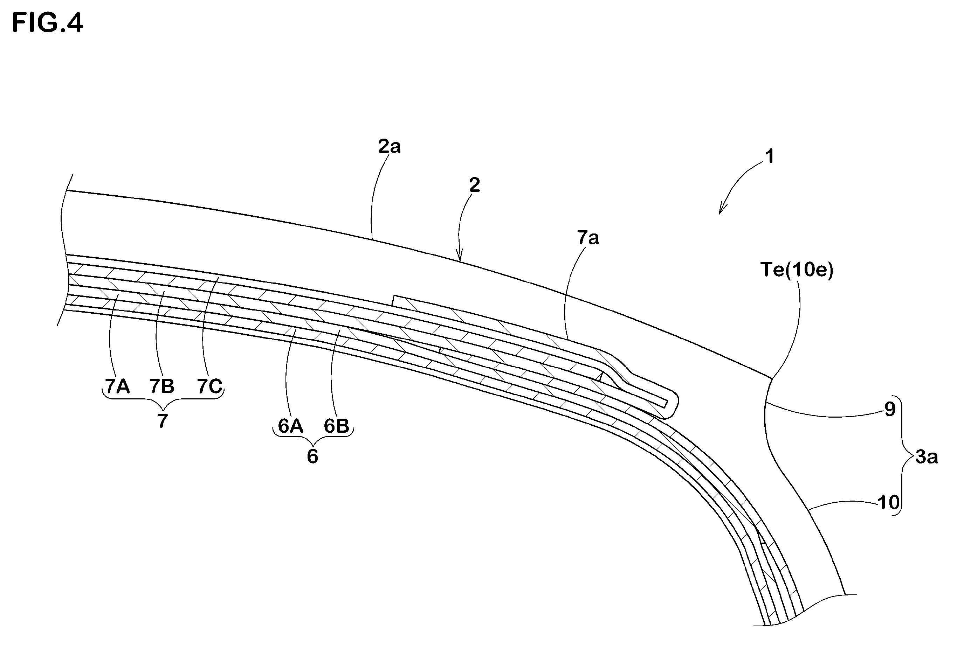

As shown in FIG. 4, the innermost belt ply 7A may have a pair of fold back portions 7a which are folded back toward the tire equator C such that each fold back portion 7a is disposed radially outside the outermost belt ply 7C to prevent a separation between belt plies 7B and 7C. In addition, the rigidity of the tread portion 2 in the axially outside area tends to be enhanced, and thereby the steering stability further increases.

The bead apex 8 is made of a hard rubber and disposed between the main portion 6a and the turn-up portions 6b in order to enhance the rigidity of the bead portion 4 and the sidewall portion 3.

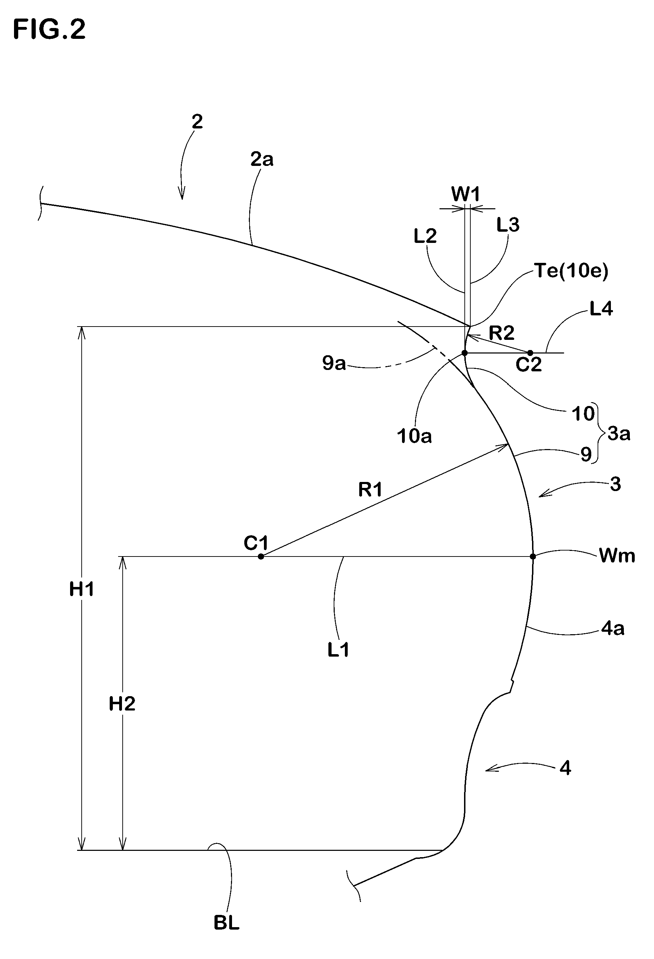

FIG.2 shows a tread profile 2a and a sidewall profile 3a of FIG. 1. In this specification, the tread profile 2a is a profile which extends between the tread edges Te. The sidewall profile 3a is a profile which extends from the tread edge Te to the tire maximum-width point Wm. Also, a bead profile 4a is a profile which extends from the tire maximum-width point Wm to the radially inwardly of the tire.

The tread edge Te is the axially outermost point of the tread portion 2. In this specification, when the axially outermost point of the tread portion 2 is clearly formed as an edge, the tread edge Te is defined as the edge. However, when such an edge is not clearly formed in the tread portion 2, the tread edge Te is defined as the radially outermost point 10e of a concave arc part 10 (described later) of the sidewall profile 3a.

The tread profile 2a smoothly extends from the tire equator C to the tread edge Te in an arc-shaped manner which protrudes toward the radially outwardly of the tire. Namely, the tread profile comprises an arc which has a center point in the tire inner cavity. The tread profile 2a is composed of a plurality of arcs each having a radius of curvature which is gradually decreasing toward the tread edge Te from the tire equator C in order to obtain a long ground contact area in the circumferential direction of the tire, and thereby the steering stability may be improved while maintaining the ride comfort.

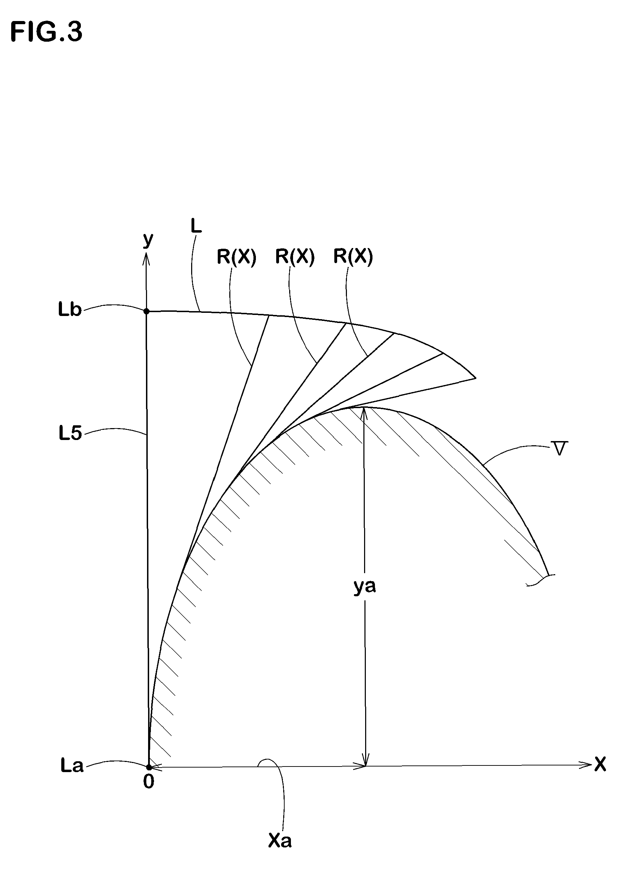

The tread profile 2a is curved substantially along an involute curve. FIG. 3 shows a graph for explaining the involute curve L. In FIG. 3, the graph has a x-y coordinate system which includes the y-axis along the tire radial direction on the tire equator, the x-axis along the tire axial direction, and the origin O located radially inward of the tire equator C. The involute curve has a basic circle which is an ellipse V with a major axis ya extending in the tire radial direction and a minor axis Xa extending on the x-axis whose one end comes into contact with the origin o. The involute curve is the locus described by one end Lb of a fixed length L5 thread of which other end La is fixed to the origin O when the thread is wound around the basic circle without slack. Since the tread profile 2a along the involute curve has a radius of curvature R(X) gradually and continuously decreasing from the tire equator C towards the sidewall portion, a large ground contact area of the tread portion 2 is obtained even when it is installed to a vehicle having a negative camber wheel. In addition, the ground contact area of such the tread portion 2 increases according to increase of the load. Accordingly, when the tire is loaded with high load, high cornering performance can be obtained due to a large cornering force.

When the radius of curvature of the tread profile 2a is too small, the steering stability of the tire tends to decrease due to small ground contact area. On the other hand, if the radius of curvature of the tread profile 2a is too large, uneven wear may happen around the tread edge Te. In this point of view, the camber amount CA at the point P which is located a distance of 0.8 times the tread half width w from the tire equator C is preferably not less than 3%, and more preferably not less than 7% of the tread half width W. Also, the camber amount CA at the point P is preferably not more than 13%, and more preferably not more than 9% of the tread half width W.

The sidewall profile 3a comprises a convex arc part 9 and a concave arc part 10. The convex arc part 9 has a center C1 of the arc located in a side of the tire inner cavity and extends from the tire maximum-width point wm to the radially outside of the tire. The concave arc part 10 has a center C2 of the arc located outside of the tire and extends from the convex arc 9 to the tread edge Te. Such the sidewall profile 3a is capable to decrease the longitudinal spring constant of the tire so as to have an improved ride comfort. In addition, the sidewall profile 3a provides a large ground contact area of the tread portion 2 even if the tire is being applied with low load, and thereby the cornering force generated from the tire being located the inside at cornering, for example, is increased. Accordingly, the cornering performance of the tire 1 is improved.

The convex arc part 9 is preferably composed of a single arc having a radius R1 of curvature, and more preferably extends beyond the tire maximum-width point Wm to the bead profile 4a to further decrease the longitudinal spring constant of the tire due to maintaining a wide flexible area in the sidewall portion 3. Moreover, since such the sidewall profile 3a does not include a rapid change portion, the durability of the tire 1 may be improved.

The radial height H2 from the bead baseline BL to the tire maximum-width point Wm is preferably in a range of from 0.40 to 0.60 times a tread height H1, and more preferably is in a range of from 0.45 to 0.55 times the tread height H1 to effectively decrease the longitudinal spring constant of the tire 1. Here, the tread height H1 is a radial height from the bead baseline BL to the tread edge Te.

The center C1 of the radius R1 of curvature of the convex arc part 9 is preferably located on the axial line L1 which passes through the tire maximum-width point Wm, and thereby the sidewall profile 3a and the bead profile 4a are smoothly connected so that the longitudinal spring constant of the tire is further decreased.

The concave arc part 10, for example, is composed of a single arc having a radius of curvature R2 to provide the tread portion 2 with flexibility when the longitudinal or lateral force is applied to the tread portion 2. Moreover, since such the single arc of the concave arc part 10 does not include a rapid change portion, the durability of the tread portion 2 may be improved.

When the radius R2 of the curvature of the concave arc part 10 is too large, the flexibility of the tread portion 2 tends to deteriorate, and uneven wear may generate around the tread edge Te. On the other hand, if the radius R2 of the curvature of the concave arc part 10 is too small, the steering stability of the tire tends to deteriorate due to the large flexure of the tread portion with lateral force applied to the tread portion 2. In this point of view, the radius R2 of the curvature of the concave arc part 10 is preferably not less than 5mm, more preferably not less than 10mm, more preferably not more than 20mm, and more preferably not more than 15mm.

As shown in FIG. 2, the center C2 of the radius R2 of the curvature of the concave arc part 10 is located outside the tire, and is preferably located on a axial line L4 which passes through the axially innermost point 10a of the concave arc part 10 to effectively decrease the longitudinal spring constant of the tire 1.

The concave arc part 10 is provided axially outside than an extended line 9a which extends radially outside of the tire from the convex arc part 9. In addition, the tread edge Te is located axially outside of the tire than the axially innermost point 10a of the concave arc part 10. Therefore, the sidewall profile 3a includes a smooth S-shaped curve formed by such an arrangement of two arc parts 9 and 10, and thereby the longitudinal spring constant of the tire 1 is effectively decreased and a large ground contact area of the tread portion 2 is obtained so that the cornering force is increased even when the tire 1 is loaded with low load. Moreover, the concave part 10 is useful to provide axially outwardly tread edges Te as far as possible, and thereby a large ground contact area of the tread portion 2 is obtained so that the cornering force is increased when the tire is loaded with high load. Accordingly, since the tire 1 in accordance with the present invention is capable to increase the cornering force at a wide range of tire load, the improved cornering performance can be obtained.

Here, in order to improve effects described above, the axial distance W1 between the innermost point 10a of the concave arc part 10 and the tread edge Te is preferably not less than 1mm, more preferably not less than 1.5mm, preferably not more than 3mm, and more preferably not more than 2.5mm.

The present invention is more specifically described and explained by means of the following Examples and References. It is to be understood that the present invention is not limited to these Examples.

### Comparison Test

Pneumatic tires for passenger cars of size 245/40R18 having the basic structure of FIG. 1 except for details shown in Table 1 were manufactured, and then the cornering force at high-load and low-load conditions, cornering performance, ride comfort and durability were tested. As to the Ref.1, a tire without the concave arc part in the sidewall profile was used. Test methods are as follows.

### Cornering force test:

Using an indoor tire tester, the cornering force was measured under the following conditions. The results are indicated by an index based on the Ref.1 being 100, wherein the larger the index, the larger the cornering performance.
Wheel rim: 18 X 8JJ
Inner pressure: 200 kPa
Slip angle: 4 degrees
Tire load: 4.75kN (low-load condition) and 6.50kN (high-load condition)

### Steering stability test:

The test tires were mounted on wheel rims of 18x8JJ with an inner pressure of 200 kPa, and installed in a vehicle (Four-wheel drive car with a displacement of 2,000 cc) for four wheels. The test driver drove the vehicle on a racing circuit with the length of 2km, and evaluated steering stability such as marginal performance in cornering by the driver's feeling. The results are indicated in Table 1 by scores based on Ref.1 being 100, wherein the larger the value, the better the performance is.

### Ride comfort test:

The test vehicle described above was drove on the racing circuit, and was evaluated the ride comfort by the driver's feeling. The test results are shown with an index based on the Ref.1 being 100, wherein the larger the index, the larger the ride comfort.

### Durability test:

The durability of test tires were evaluated by measuring running distance to breakage around the tread edge using a drum tester with an outer diameter of 1.7m under the following test conditions. The test results are shown with an index based on the Ref.1 being 100, wherein the larger the index, the larger the durability.
Wheel rim: 18 X 8JJ
Inner pressure: 180 kPa
Tire load: 4.67 kN
Speed: 50 km/hr

**Table 1**

| | Ref.1 | Ex.1 | Ex.2 | Ex.3 | Ex.4 | Ex.5 | Ex.6 | Ex.7 | Ex.8 | Ex.9 |
|---|---|---|---|---|---|---|---|---|---|---|
| Number of turn-up carcass ply | 2 | 2 | 2 | 2 | 2 | 2 | 2 | 2 | 2 | 2 |
| Number of non turn-up carcass ply | 1 | 1 | 1 | 1 | 1 | 1 | 1 | 1 | 1 | 0 |
| Radius R2 of concave arc part (mm) | - | 10.0 | 5.0 | 15.0 | 20.0 | 10.0 | 10.0 | 10.0 | 10.0 | 10.0 |
| Distance W1 (mm) | - | 2.0 | 2.0 | 2.0 | 2.0 | 1.0 | 1.5 | 2.5 | 3.0 | 2.0 |
| cornering force at low-load (Index) | 100 | 111 | 107 | 105 | 102 | 107 | 110 | 111 | 110 | 95 |
| Cornering force at high-load (Index) | 100 | 103 | 99 | 103 | 105 | 104 | 104 | 102 | 101 | 95 |
| Steering stability (Score) | 100 | 110 | 105 | 105 | 107 | 108 | 109 | 109 | 108 | 95 |
| Ride comfort (Index) | 100 | 110 | 107 | 106 | 104 | 105 | 109 | 110 | 111 | 100 |
| Durability (Index) | 100 | 111 | 106 | 106 | 100 | 105 | 109 | 109 | 107 | 95 |

From the test results, it was confirmed that the cornering performance and ride comfort of example tires in accordance with the present invention can be effectively improved compared to Ref.1.

## Claims

1. A pneumatic tire (1) comprising
a tread portion (2),
a pair of sidewall portions (3),
a pair of bead portions (4) each having a bead core (5) therein,
a carcass (6) extending between bead cores (5) through the tread portion (2) and sidewall portions (3), and
a belt (7) disposed radially outside the carcass (6) in the tread portion (2), wherein
in a tire meridian section including a tire axis under a standard state that the tire is mounted on a standard rim and inflated to a standard pressure but loaded with no tire load,
the tire (1) has a pair of sidewall profiles (3a) each extending from a tire maximum-width point in an axial direction of a tire to a tread edge,
each sidewall profile (3a) comprises a convex arc part (9) and a concave arc part (10),
the convex arc part (9) has a center (C1) of a radius of curvature (R1) located in a side of a tire inner cavity and extends from the tire maximum-width point (wm) to radially outside of the tire,
the concave arc part (10) has a center (C2) of the arc located outside of the tire and extends from the convex part (9) to the tread edge (Te),
the concave arc part (10) is located in axially outside than an extended line (9a) which extends radially outside of the tire (1) from the convex arc part (9),
the tread edge (Te) is located in the axially outside of the tire (1) than the axially innermost point (10a) of the concave arc part, and
the tire (1) has a tread profile (2a) in the tire meridian section,
**characterized in that**
the tread profile (2a) is composed of a plurality of arcs having radiuses of curvature which are gradually decreasing toward the tread edge (Te) from a tire equator (C).

2. The tire according to claim 1, wherein
the convex arc part (9) is composed of a single arc having a radius R1 of curvature.

3. The tire according to claim 1 or 2, wherein
the concave arc part (10) is composed of a single arc having a radius R2 of curvature, and the radius R2 is in a range of from 5 to 20mm.

4. The tire according to claim 1 or 2, wherein
the carcass (6) comprises: two turn-up plies (6A, 6B) each comprising a main portion (6aA, 6bB) extending between bead cores (5) and a pair of turn-up portions (6bA, 6bB) each turned up around the bead core (5) from the axially inside to the outside of the tire (1), respectively; and one non turn-up ply (6c) which extends between bead portions.

5. The tire according to claim 4, wherein
at least one radially outer end (6cB) of the turn-up portion (6bB) of turn-up plies (6B) terminates between the main portions and the belt (7).

6. The tire according to claim 1 or 2, wherein
the belt (7) comprises three belt plies (7A, 7B, 7C) including a radially innermost belt ply (7A), a radially outmost belt ply (7C) and a radially middle belt ply (7B) disposed therebetween, and
the innermost belt ply (7A) has a pair of fold back portions (7a) which are folded back toward a tire equator (C) such that each fold back portion (7a) is disposed radially outside the outermost belt ply (7C).

7. The tire according to claim 1 or 2, wherein
an axial distance W1 between an axially innermost point of the concave arc part (10) and the tread edge (Te) is in a range of from 1 to 3 mm.

## Patentansprüche

1. Luftreifen (1), umfassend,
einen Laufflächenabschnitt (2),
ein Paar Seitenwandabschnitte (3),
ein Paar Wulstabschnitte (4), die jeweils einen Wulstkern (5) darin aufweisen,
eine Karkasse (6), die sich zwischen den Wulstkernen (5) durch den Laufflächenabschnitt (2) und die Seitenwandabschnitte (3) erstreckt, und
einen Gürtel (7), der radial außerhalb der Karkasse (6) in dem Laufflächenabschnitt (2) angeordnet ist, wobei
in einem Reifenmeridianquerschnitt, der eine Reifenachse umfasst, unter einem Standardzustand, in welchem der Reifen auf eine Standardfelge aufgezogen und auf einen Standarddruck aufgepumpt aber nicht mit einer Reifenlast belastet ist,
der Reifen (1) ein Paar Seitenwandprofile (3a) aufweist, die sich jeweils von einem Punkt maximaler Reifenbreite in einer axialen Richtung eines Reifens zu einer Laufflächenkante erstrecken,
jedes Seitenwandprofil (3a) einen konvexen Bogenteil (9) und einen konkaven Bogenteil (10) umfasst,
der konvexe Bogenteil (9) ein Zentrum (C1) mit einem Krümmungsradius (R1) aufweist, das in einer Seite eines Reifeninnenhohlraums gelegen ist, und sich von dem Punkt (Wm) maximaler Reifenbreite von dem Reifen radial nach außen erstreckt,
der konkave Bogenteil (10) ein Zentrum (C2) des Bogens aufweist, das außerhalb des Reifens gelegen ist, und sich von dem konvexen Teil (9) zu der Laufflächenkante (Te) erstreckt,
der konkave Bogenteil (10) axial weiter außen als eine Verlängerungslinie (9a) gelegen ist, die sich von dem konvexen Bogenteil (9) des Reifens (1) radial nach außen erstreckt,
die Laufflächenkante (Te) axial weiter außen von dem Reifen (1) als der axial innerste Punkt (10a) des konkaven Bogenteils gelegen ist, und
der Reifen (1) ein Laufflächenprofil (2a) in dem Reifenmeridianquerschnitt aufweist,
**dadurch gekennzeichnet, dass**
das Laufflächenprofil (2a) aus einer Mehrzahl von Bögen mit Krümmungsradien zusammengesetzt ist, die von dem Reifenäquator (C) zu der Laufflächenkante (Te) hin allmählich abnehmen.

2. Reifen nach Anspruch 1, wobei der konvexe Bogenteil (9) aus einem einzigen Bogen mit einem Krümmungsradius R1 zusammengesetzt ist.

3. Reifen nach Anspruch 1 oder 2, wobei der konkave Bogenteil (10) aus einem einzigen Bogen mit einem Krümmungsradius R2 zusammengesetzt ist, und der Radius R2 in einem Bereich von 5 bis 20 mm liegt.

4. Reifen nach Anspruch 1 oder 2, wobei die Karkasse (6) umfasst: zwei Umschlaglagen (6A, 6B), die jeweils einen Hauptabschnitt (6aA, 6bB), der sich zwischen den Wulstkernen (5) erstreckt, und ein Paar Umschlagabschnitte (6bA, 6bB), die jeweils um den Wulstkern (5) von der axialen Innenseite zu der Außenseite des Reifens (1) umgeschlagen sind, umfassen; und eine Nichtumschlaglage (6C), die sich zwischen den Wulstabschnitten erstreckt.

5. Reifen nach Anspruch 4, wobei zumindest ein radial äußeres Ende (6cB) des Umschlagabschnittes (6bB) der Umschlaglagen (6B) zwischen den Hauptabschnitten und dem Gürtel (7) endet.

6. Reifen nach Anspruch 1 oder 2, wobei
der Gürtel (7) drei Gürtellagen (7A, 7B, 7C) umfasst, die eine radial innerste Gürtellage (7A), eine radial äußerste Gürtellage (7C) und eine radial mittlere Gürtellage (7B), die dazwischen angeordnet ist, einschließen, und
die innerste Gürtellage (7A) ein Paar Rückfaltabschnitte (7a) umfasst, die zu einem Reifenäquator (C) hin zurückgefaltet sind, so dass jeder Rückfaltabschnitt (7a) radial außerhalb der äußersten Gürtellage (7C) angeordnet ist.

7. Reifen nach Anspruch 1 oder 2, wobei ein axialer Abstand W1 zwischen einem axial innersten Punkt des konkaven Bogenteils (10) und der Laufflächenkante (Te) in einem Bereich von 1 bis 3 mm liegt.

## Revendications

1. Bandage pneumatique (1) comprenant
une portion formant bande de roulement (2),
une paire de portions de parois latérales (3),
une paire de portions formant talons (4) ayant chacune une âme de talon (5) à l'intérieur,
une carcasse (6) s'étendant entre les âmes de talons (5) à travers la portion formant bande de roulement (2) et les portions de parois latérales (3), et
une ceinture (7) disposée radialement à l'extérieur de la carcasse (6) dans la portion formant bande de roulement (2), dans lequel dans une section méridienne du pneumatique incluant un axe du pneumatique, dans un état standard dans lequel le pneumatique est monté sur une jante standard et gonflée à une pression standard mais en l'absence de charge sur le pneumatique :
le pneumatique (1) présente une paire de profils de paroi latérale (3a) s'étendant chacun depuis un point de largeur maximum du pneumatique, dans une direction axiale du pneumatique, jusqu'à une bordure de roulement,
chaque profil de paroi latérale (3a) comprend une partie en arc convexe (9) et une partie en arc concave (10),
la partie en arc convexe (9) possède un centre (C1) d'un rayon de courbure (R1) situé dans un côté d'une cavité intérieure du pneumatique, et s'étend depuis le point de largeur maximum (Wm) du pneumatique jusqu'à l'extérieur du pneumatique, en sens radial,
la partie en arc concave (10) possède un centre (C2) de l'arc situé à l'extérieur du pneumatique et s'étend depuis la partie convexe (9) jusqu'à la bordure de roulement (Te),
la partie en arc concave (10) est située axialement à l'extérieur d'une ligne en extension (9a) qui s'étend radialement à l'extérieur du pneumatique (1) depuis la partie en arc convexe (9),
la bordure de roulement (Te) est située radialement plus à l'extérieur du pneumatique (1) que le point axialement le plus à l'intérieur (10a) de la partie en arc concave, et
le pneumatique (1) possède un profil de roulement (2a) dans la section méridienne du pneumatique,
**caractérisé en ce que**
le profil de roulement (2a) est composé d'une pluralité d'arcs ayant des rayons de courbure qui diminuent progressivement vers la bordure de roulement (Te) depuis un équateur (C) du pneumatique.

2. Pneumatique selon la revendication, dans lequel
la partie en arc convexe (9) est composée d'un arc unique ayant un rayon de courbure (R1).

3. Pneumatique selon la revendication 1 ou 2, dans lequel
la partie en arc concave (10) est composée d'un arc unique ayant un rayon de courbure (R2), et le rayon (R2) est dans une plage de 5 à 20 mm.

4. Pneumatique selon la revendication 1 2, dans lequel
la carcasse (6) comprend : deux nappes rabattues (6A, 6B) comprenant chacune une portion principale (6aA, 6bB) s'étendant entre les âmes de talons (5) et une paire de portions rabattues (6bA, 6bB), chacune rabattue autour de l'âme de talon (5) depuis l'intérieur vers l'extérieur dans le sens axial du pneumatique (1), respectivement ; et une nappe non rabattue (6C) qui s'étend entre les portions de talons.

5. Pneumatique selon la revendication 4, dans lequel
au moins une extrémité radialement extérieure (6cB) de la portion rabattue (6bB) des nappes rabattues (6B) se termine entre les portions principales et la ceinture (7).

6. Pneumatique selon la revendication 1 ou 2, dans lequel
la ceinture (7) comprend trois nappes de ceinture (7A, 7B, 7C) incluant une nappe de ceinture radialement tout à fait à l'intérieur (7A), une nappe de ceinture radialement tout à fait à l'extérieur (7C) et une nappe de ceinture radialement médiane (7B) disposée entre celles-ci, et
la nappe de ceinture radialement tout à fait à l'intérieur (7A) comprend une paire de portions retournées (7a) qui sont retournées vers un équateur du pneumatique (C) de telle façon que chaque portion retournée (7a) est disposée radialement à l'extérieur de la nappe de ceinture tout à fait à l'extérieur (7C).

7. Pneumatique selon la revendication 1 ou 2, dans lequel
une distance axiale w1 entre un point axialement tout à fait à l'intérieur de la partie en arc concave (10) et la bordure de roulement (Te) est dans une plage de 1 à 3 mm.
